# EUROPÄISCHE PATENTSCHRIFT

(11) **EP 2 501 947 B1**
(45) Veröffentlichungstag und Bekanntmachung des Hinweises auf die Patenterteilung: **08.07.2015**
(21) Anmeldenummer: 10779717.7
(22) Anmeldetag: 15.11.2010
(51) Int. Cl.: F16D 3/223, B64C 13/28

(54) **TRANSMISSIONSANORDNUNG FÜR EIN ANTRIEBSSYSTEM VON STELLFLÄCHEN EINES FLUGZEUGS**
TRANSMISSION ASSEMBLY FOR A DRIVE SYSTEM OF STORAGE SPACES OF AN AIRCRAFT
AGENCEMENT DE TRANSMISSION POUR UN SYSTÈME D'ENTRAÎNEMENT DE SURFACES DE RÉGLAGE D'UN AVION

(30) Priorität: 16.11.2009 DE 102009053518
(43) Veröffentlichungstag der Anmeldung: 26.09.2012
(73) Patentinhaber: Liebherr-Aerospace Lindenberg GmbH, 88161 Lindenberg/Allgäu (DE)
(72) Erfinder: KLEINHANS, Reinhold, 88167 Grünenbach (DE); BÄR, Josef, 87448 Lanzen (Waltenhofen) (DE); SCHLEGEL, Thomas, 88316 Isny (DE)
(74) Vertreter: Laufhütte, Dieter
(86) Internationale Anmeldenummer: PCT/EP2010/006941
(87) Internationale Veröffentlichungsnummer: WO 2011/057819

(56) Entgegenhaltungen:
- US-A- 3 986 689
- US-A- 4 871 130
- US-A- 5 725 453
- US-A1- 2002 189 887
- US-A1- 2006 258 501
- US-A1- 2008 128 548

## Beschreibung

Die vorliegende Erfindung betrifft ein Hochauftriebssystem mit einer Transmissionsanordnung für ein Antriebssystem von Stellflächen eines Flugzeugs zur Übertragung einer Drehbewegung von einer ersten Welle unter einem Winkel von α > 0 auf eine zweite Welle.

Die Stellflächen eines Flugzeugs werden bewegt, um die aerodynamischen Eigenschaften des Flugzeugs zu verändern. Hierzu müssen entsprechende Antriebssysteme vorgesehen sein. Hochauftriebssysteme dienen dabei dazu, den Auftrieb in Langsamflugphasen zu erhöhen. Weiterhin ist während der Landephase eine Widerstandserhöhung notwendig. Als Stellflächen für Hochauftriebssysteme kommen dabei insbesondere Vorder- und Hinterkantenklappen (Slats und Flaps) zum Einsatz.

Werden zum Antrieb der Stellflächen Antriebsstränge eingesetzt, so müssen ggf. räumliche Winkel überwunden werden. Um solche Winkel in der Transmission von Hochauftriebssystemen zu realisieren, wurden bisher hauptsächlich Kreuzgelenke, Bogenzahnkupplungen (für Winkel bis 8,5°) und Kegelzahnradgetriebe (für Winkel bis zu 90°) verwendet. Insbesondere werden dabei Strangwinkel α von mehr als 8,5° üblicherweise mit starren Kegelzahnradgetrieben (Bevel Gear Box) verwirklicht.

Aus der US 4 871 130 A ist eine Transmissionsvorrichtung für ein Antriebssystem eines Flugzeugs zur Übertragung einer Drehbewegung von einer ersten Welle auf eine zweite Welle unter einem Winkel, der größer als null ist. Diese bekannte Transmissionsanordnung weist ein Gleichlaufgelenk auf, welches mit der ersten und zweiten Welle in Verbindung steht und die Drehbewegung homokinematisch von einem ersten und einem zweiten Gelenkelement überträgt. Es können aber hier Fluchtungsfehler entstehen und das Gleichlaufgelenk ist nicht vor mechanischen Beschädigungen ausreichend geschlützt.

Aus der US-A-3986689 ist eine Transmissionsanordnung für ein Hochauf-triebssystem eines Flugzeugs bekannt.

Aufgabe der vorliegenden Erfindung ist es, ein Hochauftriebssystem mit einer Transmissionsanordnung für ein Antriebssystem von Stellflächen eines Flugzeugs zur Verfügung zu stellen, welche flexibler als bekannte Transmissionsanordnungen einsetzbar ist.

Diese Aufgabe wird erfindungsgemäß durch ein Hochauftriebssystem mit einer Transmissionsanordnung gemäß Anspruch 1 gelöst. Die erfindungsgemäße Transmissionsanordnung für für das Hochauftriebssystem, dient dabei zur Übertragung einer Drehbewegung von einer ernsten Welle unter einem Winkel α > 0 auf eine zweite Welle. Die erfindungsgemäße Transmissionsanordnung umfasst dabei ein Gleichlaufgelenk mit einem ersten und einem zweiten Gelenkelement, welche mit der ersten und der zweiten Welle verbunden oder verbindbar sind, wobei die Drehbewegung homokinematisch von dem ersten auf das zweite Gelenkelement übertragen wird. Die erfindungsgemäße Transmissionsanordnung zeichnet sich dadurch aus, dass das Gleichlaufgelenk ein Dichtungsgehäuse mit einem starren Gehäuseelement aufweist, wobei das Gehäuseelement mit einem Montageelement verbunden ist und eine Abwinkelung um einen festen Winkel α₁ vorgibt.

Ein solches Gleichlaufgelenk ist ein flexibles Winkelgetriebe, mit welchem eine stufenlose Einstellung des Strangwinkels α möglich ist. Durch ein Gleichlaufgelenk können daher stufenlos Beugungswinkel zwischen 0° und maximal 50°, vorteilhafterweise zwischen 0° und 40° verwirklicht werden. Das Gleichlaufgelenk lässt sich damit ohne bzw. ohne wesentliche Modifikationen für unterschiedlichste Strangwinkel einsetzen. Dies erspart Entwicklungs- und Qualifikationsaufwand. Zudem kann erheblich schneller auf Änderungen im Aufbau des Flugzeugs reagiert werden. Bei gleichen Anforderungen ist ein solches Gleichlaufgelenk zudem leichter und kostengünstiger als vergleichbare Kegelzahnradgetriebe.

Bei dem erfindungsgemäßen Gleichlaufgelenk handelt es sich dabei um ein homokinematisches Gelenk, das heißt es kommt nicht zu Drehzahlschwankungen, wie sie z. B. bei Kreuzgelenken auftreten. Zudem kann das erfindungsgemäße Gleichlaufgelenk auch bei größeren Strangwinkeln insbesondere von mehr als 8,5° eingesetzt werden.

Zudem kann durch den Einsatz des Gleichlaufgelenkes ein Winkelausgleich, wie er bei starren Kegelzahnradgetrieben notwendig ist, um Fluchtungsfehler zu beseitigen, entfallen. Auch hierdurch werden zusätzliche Kosten und Gewicht eingespart.

Gleichlaufgelenke sind dabei im Kraftfahrzeugbau seit langem bekannt, um die Vorderräder von frontgetriebenen Kraftfahrzeugen anzutreiben. Gleichlaufgelenke werden dort eingesetzt, um trotz des sich verändernden Lenkwinkels eine Übertragung des Drehmoments auf die Vorderräder zu ermöglichen.

In einem Antriebssystem von Stellflächen eines Flugzeugs wurden Gleichlaufgelenke dagegen bisher noch nicht eingesetzt. Dabei wurde bisher nicht erkannt, dass trotz der eigentlich starren Einbausituation des Antriebsstranges die hohe Flexibilität bei Beugewinkeln bis 40°, welche Gleichlaufgelenke bieten, von großem Vorteil ist.

Die erfindungsgemäße Transmissionsanordnung mit einem Gleichlaufgelenk, welches an sich eine Veränderung des Strangwinkels α ermöglicht, kommt daher vorteilhafterweise zum Einsatz, obwohl die erste und die zweite Welle gegeneinander mit einem festen Winkel α an der Flugzeugstruktur montierbar bzw. montiert sind. Wie oben dargestellt, kann durch die stufenlose Verstellbarkeit des Strangwinkels α bei dem erfindungsgemäßen Gleichlaufgelenk der Entwicklungsaufwand bei der Anpassung an unterschiedliche Strangführungen sowie der Montageaufwand erheblich verringert werden.

Das Gleichlaufgelenk der erfindungsgemäßen Transmissionsanordnung umfasst das Montageelement zur festen Verbindung mit der Flugzeugstruktur, insbesondere einen Flansch, wobei das erste oder das zweite Gelenkelement über mindestens ein Lager an dem Montageelement gelagert ist bzw. sind. So kann das eingespannte Lager Kräfte sowie Kippmomente aufnehmen und an die Flugzeugstruktur weiterleiten.

Vorteilhafterweise ist dabei das Lager in einer Ebene mit dem Gelenkmittelpunkt angeordnet. Durch diese Lageranordnung direkt über dem Gelenkmittelpunkt werden die Kippmomente auf das Lager so gering wie möglich gehalten. Dadurch kann die Dimensionierung dementsprechend klein ausfallen.

Vorteilhafterweise ist dabei vorgesehen, dass das Lager gedichtet ausgeführt ist und damit gleichzeitig eine Dichtfunktion für die Schmierung des Gelenkes übernimmt. Insbesondere ist dabei ein Gehäuseelement, welches als Dichtung für die Schmierung des Gelenkes eingesetzt wird, am Montageelement befestigt. Insbesondere kann dieses Gehäuseelement mit dem Montageelement starr verbunden sein.

Bei bekannten Gleichlaufgelenken wird die Dichtung des Gelenks üblicherweise durch einen Faltenbalg aus Gummi oder ähnlichen Elastomeren zur Verfügung gestellt, welcher drehfest mit den beiden Gelenkelementen verbunden ist und sich hierdurch mit der Gelenkwelle mitdreht. Hierdurch ist der Balg jedoch einer beständigen Walkbewegung ausgesetzt. Gerade bei einem großen Strangwinkel führt dies zu einem sehr hohen Verschleiß des Faltenbalgs.

Die erfindungsgemäße Transmissionsanordnung ist nicht auf den Einsatz in einem Antriebssystem von Stellflächen eines Flugzeugs beschränkt. Vorzugsweise wird das Gehäuseelement des Gleichlaufgelenks als Dichtung für die Schmierung des Gelenkes eingesetzt, wobei das erste und/oder das zweite Gelenkelement über das Lager gegenüber dem starren Gehäuseelement drehbar gelagert ist, und wobei das Lager vorzugsweise dichtend ausgeführt ist. Das Gehäuseelement ist dabei so ausgeführt, dass es einen Gelenkwinkel α > 0 ermöglicht.

Das Gehäuseelement muss durch die Lagerung nicht mit der Drehbewegung der Gelenkwellen mitdrehen. Hierdurch unterliegt das Gehäuseelement auch keiner Walkbewegung. Der Einsatz eines derart von den Gelenkelementen entkoppelten Gehäuseelements erlaubt es zudem, das Gehäuse gegebenenfalls zumindest teilweise starr auszuführen.

Die erfindungsgemäße Transmissionsanordnung mit dem von der Drehbewegung der Gelenkelemente entkoppelten Gehäuseelementen kann dabei in beliebigen Antriebsanordnungen zur Überwindung räumlicher Winkel eingesetzt werden und ist nicht auf die Transmission in Antriebssystemen von Stellflächen eines Flugzeugs begrenzt.

Eine erfindungsgemäße Transmissionsanordnung mit einem entkoppelten Gehäuseelement hat jedoch bei der Verwendung in einem Antriebssystem von Stellflächen eines Flugzeugs ganz erhebliche Vorteile. Insbesondere können hierdurch auch starre oder teilweise starre Gehäuseelemente eingesetzt werden.

Vorteilhafterweise ist bei der erfindungsgemäßen Transmissionsanordnung das Gehäuseelement drehfest mit einem Montageelement verbunden, durch welches das Gleichlaufgelenk an einer Struktur fest montiert oder montierbar ist. Das Gehäuseelement ist so an der Struktur festgelegt, während die Gelenkelemente an dem Montageelement bzw. dem Gehäuseelement über Lager drehbar gelagert sind.

Weiterhin vorteilhafterweise weist das Gleichlaufgelenk einer erfindungsgemäßen Transmissionsanordnung ein starres Gehäuseelement auf, welches eine Abwinkelung um einen festen Winkel α₁ vorgibt. Ein solches winkelstarres Gehäuseelement bietet dabei Schutz vor mechanischen Beschädigungen von außen. Unterschiedliche Winkel α₁ können dabei problemlos realisiert werden, indem entsprechende starre Gehäuseelemente mit unterschiedlichen festen Winkeln α₁ eingesetzt werden. Ansonsten muss an der Konstruktion des Gleichlaufgelenks dagegen nichts verändert werden. Hierdurch werden die Vorteile einer starren Transmission mit der Flexibilität eines Gleichlaufgelenks kombiniert. Das starre Gehäuseelement dient dabei vorteilhafterweise als Dichtung für die Schmierung des Lagers.

Das Gleichlaufgelenk einer erfindungsgemäßen Transmissionsanordnung umfasst weiterhin vorteilhafterweise ein flexibles Gehäuseelement, insbesondere einen Balg, welcher eine Montage mit unterschiedlichen Winkeln α₂ ermöglicht. Ein solches flexibles Gehäuseelement, welches vorteilhafterweise ebenfalls als Dichtung für die Schmierung des Lagers eingesetzt wird, ermöglicht so eine problemlose Montage ohne aufwendige Justierarbeiten. Das flexible Gehäuseelement ermöglicht insbesondere einen Ausgleich von Fluchtungsfehlern. Zudem ergibt sich eine gewisse Flexibilität im Antriebsstrang.

Die vorliegende Transmissionsanordnung kann, wenn dies gewünscht ist, auch nur mit einem flexiblen Gehäuseelement und ohne ein starres Gehäuseelement zur Vorgabe eines festen Winkels eingesetzt werden, oder umgekehrt nur mit einem starren Gehäuseelement zur Vorgabe eines festen Winkels und ohne ein flexibles Gehäuseelement eingesetzt werden. Vorteilhafterweise wird jedoch sowohl ein starres Gehäuseelement, welches die grobe Ausrichtung des Gleichlaufgelenks durch einen festen Winkel α₁ vorgibt, als auch mit einem daran angeordneten flexiblen Gehäuseelement, welches eine stufenlose Anpassung auf einen Winkel α₂ erlaubt, eingesetzt. Bei dieser Abdichtungsmethode wird daher das winkelstarre Gehäuseelement eingesetzt, um den groben Strangwinkel vorzugeben, und das flexible Gehäuseelement, um Fluchtungsfehler auszugleichen. Durch dieses Dichtungskonzept ist das Gelenk für jeden Winkel stufenlos einstellbar. Es muss lediglich das winkelstarre Gehäuse entsprechend ausgetauscht werden. Vorteilhafterweise ist dabei der Winkelbereich für die stufenlose Einstellmöglichkeit durch das flexible Gehäuseelement kleiner als der fest vorgegebene Strangwinkel durch das starre Gehäuseelement, das heißt |α₂ - α₁| < α₁.

Vorteilhafterweise wird dieses Dichtungskonzept dabei insbesondere bei größeren Strangwinkeln von mehr als 8,5°. Nach oben ist der Strangwinkel durch die Kinematik des Gleichlaufgelenks dabei max. 50°, vorteilhafterweise auf ca. 40° beschränkt.

Weiterhin vorteilhafterweise sind das erste und das zweite Gelenkelement jeweils über Lager gegenüber dem Dichtgehäuse drehbar gelagert. Dieses Dichtungsgehäuse kann dabei entweder nur aus starren Gehäuseelementen, nur aus flexiblen Gehäuseelementen, oder vorteilhafterweise wie oben beschrieben aus mindestens einem starren Gehäuseelement, welches einen festen Strangwinkel α₁ vorgibt, und einem flexiblen Gehäuseelement, welches eine stufenlose Bewegung um diesen festen Winkel auf unterschiedliche Winkel α₂ ermöglicht, aufgebaut. Vorteilhafterweise dient dabei mindestens eines der Lager auch zur Abdichtung des Dichtgehäuses. Weiterhin vorteilhafterweise sind beide Lager dichtend ausgeführt und dienen so gleichzeitig der Abdichtung der Schmierung.

Im folgenden soll nun der prinzipielle Aufbau am Beispiel des Gelenkes nach "Rzeppa" gleiches gilt auch für die anderen homokinematischen Gelenke eines vorteilhafterweise in einer erfindungsgemäßen Transmissionsanordnung eingesetzten Gleichlaufgelenks kurz beschrieben werden: Eines der beiden Gelenkelemente weist dabei ein Außenteil auf, welches auf seiner Innenfläche Außenlaufrillen aufweist. Das andere Gelenkelement weist ein innerhalb des Außenteils angeordnetes Innenteil auf, welches auf seiner Außenfläche Innenlaufrillen aufweist. Zwischen Innenteil und Außenteil sind Kugeln vorgesehen, welche für eine Paarung zwischen dem Außenlaufrillen am Außenteil und den Innenlaufrillen am Innenteil sorgen. Die Kugeln übertragen so das Drehmoment von dem einen Gelenkelement auf das andere Gelenkelement. Zur Lagerung der Kugeln ist ein Käfig vorgesehen, welcher zwischen dem Innenteil und dem Außenteil angeordnet ist. Durch die Bewegung der Kugeln entlang der Außenlaufrillen und der Innenlaufrillen ermöglicht das erfindungsgemäße Gleichlaufgelenk eine stufenlose Einstellung eines Strangwinkels.

Die vorliegende Erfindung soll nun anhand eines Ausführungsbeispiels sowie einer Zeichnung näher beschrieben werden. Dabei zeigt:

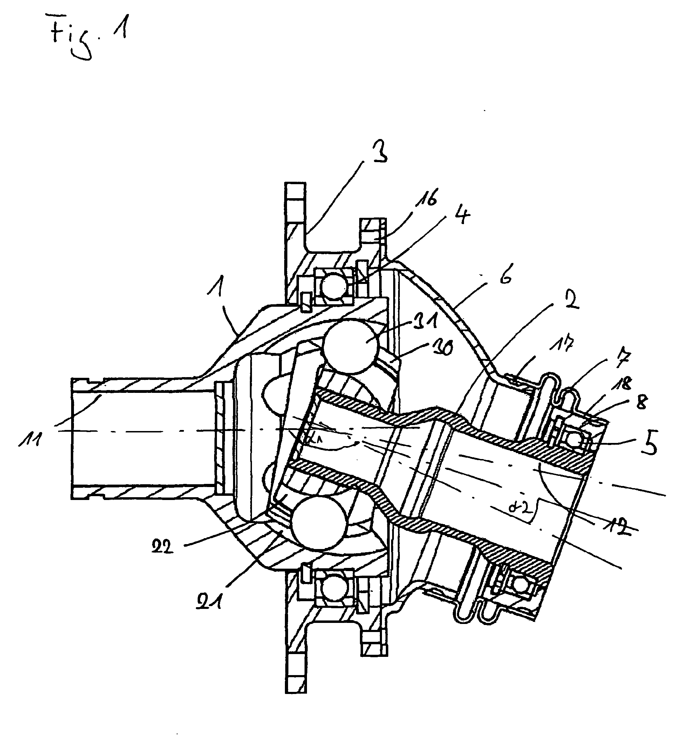

- Figur 1:: das Ausführungsbeispiel einer erfindungsgemäßen Transmissionsanordnung in einer Schnittansicht durch die Drehachsen der beiden Gelenkelemente.

In Figur 1 ist ein Ausführungsbeispiel einer erfindungsgemäßen Transmissionsanordnung gezeigt. Die Transmissionsanordnung umfasst dabei ein Gleichlaufgelenk mit einem ersten Gelenkelement 1 und einem zweiten Gelenkelement 2, welche mit einer ersten und einer zweiten Welle verbindbar sind. Das Gleichlaufelement überträgt dabei eine Drehbewegung von dem ersten Gelenkelement 1 auf das zweite Gelenkelement 2 homokinematisch. Zur stufenlosen Einstellung des Strangwinkels α zwischen den Drehachsen des ersten Gelenkelements 1 und des zweiten Gelenkelements 2 weist das erste Gelenkelement 1 ein Außenteil auf, welches auf seiner Innenfläche bzw. Bahnen Laufrillen 21 aufweist. Das zweite Gelenkelement 2 umfasst wiederum ein Innenteil, welches auf seiner Außenfläche Innenlaufrillen 22 aufweist. Die Innenlaufrillen 22 und die Außenlaufrillen 21 werden dabei durch Kugeln 31 gekoppelt, welche durch einen Käfig 30 geführt werden. Der Käfig 30 weist dabei eine kugelflächenförmige Innenseite auf, welche die Außenfläche des Innenteils umgibt und vorteilhafterweise an dieser geführt ist. Die Außenfläche des Käfigs 30 ist ebenfalls kugelflächenförmig. Das Gleichlaufgelenk ermöglicht so eine homokinematische Übertragung der Drehzahl von dem ersten Gelenkelement 1 auf das zweite Gelenkelement 2 oder umgekehrt, wobei die Anordnung eine stufenlose Einstellung des Strangwinkels α ohne jede Veränderung der Gelenkelemente ermöglicht.

Das erste Gelenkelement 1 und das zweite Gelenkelement 2 weisen dabei jeweils Verbindungsbereiche zur Verbindung mit einer ersten Welle 1 und einer zweiten Welle 2 auf. Die erste Welle 1 kann dabei auf den Verbindungsbereich 11 des ersten Gelenkelements aufgeschoben oder in diesen eingeschoben bzw. in irgendeiner Form befestigt werden. Die zweite Welle 2 kann in den Verbindungsbereich 12 des zweiten Gelenkelements 2 eingeschoben bzw. befestigt werden.

Die erfindungsgemäße Transmissionsanordnung weist ein Montageelement 3 auf, an welchem das erste Gelenkelement 1 über ein Lager 4 drehbar gelagert ist. Das Montageelement 3 ist dabei als Flansch ausgeführt, welcher mit einer Struktur z. B. durch Verschraubung fest verbunden werden kann. Hierdurch kann das eingespannte Lager 4 Kräfte sowie Kippmomente aufnehmen und an die Struktur weiterleiten. Das Lager 4 ist dabei in der gleichen Ebene angeordnet wie der Gelenkmittelpunkt, welcher durch den Schnittpunkt der jeweiligen Drehachsen des ersten Gelenkelements 1 und des zweiten Gelenkelements 2 definiert ist. Durch diese Lageranordnung vorzugsweise direkt über dem Gelenkmittelpunkt können die Kippmomente auf das Lager so gering wie möglich gehalten werden. Hierdurch kann die Dimensionierung des Lagers entsprechend klein ausfallen.

Um die Funktion des Lagers zu gewährleisten, muss dieses geschmiert sein. Insbesondere kommt dabei eine Fettschmierung zum Einsatz. Dementsprechend muss das Lager ein dichtes Gehäuse für die Schmierung aufweisen. Erfindungsgemäß weist das Gleichlaufgelenk dabei ein Dichtgehäuse auf, welches als Dichtung für die Schmierung des Gelenkes eingesetzt wird. Das erste und das zweite Gelenkelement sind dabei jeweils über Lager gegenüber diesem Dichtgehäuse drehbar gelagert. Hierdurch muss sich das Dichtgehäuse nicht mit den Drehwellen mitdrehen, so dass das Gehäuse zum einen zumindest teilweise starr ausgeführt werden kann und zum anderen bei einer flexiblen Ausführung des Gehäuses keine Walkbewegung entsteht.

Das Dichtgehäuse umfasst dabei ein erstes Gehäuseelement 6, welches am Montageelement 3 angeordnet ist. Das erste Gelenkelement 1 ist damit über das Lager 4 drehbar gegenüber dem Gehäuseelement 6 am Montageelement gelagert. Das Lager 4 ist dabei vorteilhafterweise gedichtet ausgeführt und übernimmt so gleichzeitig die Dichtfunktion des Systems zwischen dem ersten Gehäuseelement 6 und dem ersten Gelenkelement 1. Das erste Gehäuseelement 6 ist dabei drehfest z. B. über Verschraubungen 16 mit dem Montageelement 3 verbunden.

Erfindungsgemäß ist das erste Gehäuseelement dabei starr ausgeführt und gibt durch seine Form einen festen Winkel α₁ für den Strangwinkel vor. Insbesondere weist das erste Gehäuseelement dabei auf beiden Seiten Verbindungsbereiche auf, deren Ebenen gegeneinander um den Winkel α₁ verkippt sind. An dem ersten Gehäuseelement 6 ist ein zweites Gehäuseelement 7 angeordnet, welches flexibel ausgeführt ist. Das zweite Gehäuseelement 7 ist dabei z. B. als ein Balg aus Gummi, Silikon oder Metall ausgeführt. Dieses flexible Gehäuseelement ermöglicht dabei eine stufenlose Veränderung des Strangwinkels in einem gewissen Bereich um den durch das starre Gehäuseelement 6 fest vorgegebenen Strangwinkel α₁. Das winkelstarre Gehäuseelement 6 gibt so den groben Strangwinkel vor, während das flexible Gehäuseelement 7 einen Ausgleich von Fluchtungsfehlern zuläßt. Die Veränderung des Strangwinkels, welche durch das flexible Gehäuseelement 7 möglich ist, kann dabei erheblich kleiner gewählt werden als der durch das starre Gehäuseelement 6 fest vorgegebenen Strangwinkel. Das Gelenk ist dennoch für jeden Winkel stufenlos einstellbar, in dem das winkelstarre Gehäuse entsprechend ausgetauscht bzw. angepaßt wird.

Das zweite Gelenkelement 2 ist an dem flexiblen Gehäuseelement 7 über ein Lager 5 drehbar gelagert. Hierfür wird ein Ringelement 8 eingesetzt, an welchem das flexible Gehäuseelement 7 befestigt ist, und in welchem das Lager 5 angeordnet ist. Auch das Lager 5 ist dabei vorteilhafterweise dichtend ausgeführt und übernimmt die Dichtfunktion des Systems.

Das Dichtungsgehäuse aus dem Gehäuseelement 6 und dem Gehäuseelement 7 ist somit über die Lager 4 und 5 von der Drehbewegung der Gelenkelemente komplett entkoppelt. Hierdurch entsteht keine Walkbewegung, was den Verschleiß bei großen Strangwinkeln erheblich reduziert. Zudem ist die Vorgabe eines groben Strangwinkels durch das starre Gehäuseelement 6 möglich. Das flexible Gehäuseelement 7 ist dabei in einem Verbindungsbereich 17 drehfest am starren Gehäuseelement 6 und in einem Verbindungsbereich 18 drehfest an dem Ringelement 8 angeordnet.

Durch die Kombination aus einem einfach auswechselbaren winkelstarren Gehäuseelement und einem von dem Gelenk entkoppelten Balg wird der Nachteil des sehr hohen Verschleißes eines Faltenbalgs durch Walken bei großen Beugewinkeln eliminiert. Zudem bietet das starre Gehäuseelement Schutz vor mechanischen Beschädigungen von außen. Zudem muss das flexible Gehäuseelement nur noch relativ kleine Winkelabweichungen korrigieren, so dass es entsprechend klein und stabil ausgeführt werden kann.

Die erfindungsgemäße Transmissionsanordnung kommt vorteilhafterweise in einem Antriebssystem von Stellflächen eines Flugzeugs zum Einsatz, insbesondere in der Transmission eines Hochauftriebssystems. Das erfindungsgemäße Gelenk lässt sich dabei ohne jegliche Modifikation an den Gelenkelementen für verschiedenste Strangwinkel einsetzen. Hierfür muss lediglich das starre Gehäuseelement entsprechend angepaßt werden. Dies erspart Entwicklungs- und Qualifikationsaufwand. Zudem kann schnell auf Änderungen im Aufbau des Flugzeugs reagiert werden. Bei gleichen Anforderungen ist das erfindungsgemäße Gleichlaufgelenk zu dem erheblich leichter und kostengünstiger als vergleichbare Kegelzahnradgetriebe.

Die Transmissionsanordnung wird dabei vorteilhafterweise mit einem festen Strangwinkel an der Flugzeugstruktur festgelegt. Durch die frei bewegliche Anordnung der Wellen kann dabei auf einen weiteren Winkelausgleich verzichtet werden, welcher bei komplett starren Anordnungen notwendig wäre, um Fluchtungsfehler zu beseitigen. Auch hierdurch können zusätzliche Kosten und Gewicht eingespart werden.

Der Einsatz einer Transmissionsanordnung mit einem erfindungsgemäßen Dichtungskonzept, bei welchem das Dichtgehäuse von der Drehbewegung der Gelenkelementes entkoppelt ist, ist jedoch auch in anderen Bereichen möglich.

## Patentansprüche

1. Hochauftriebssystem eines Flugzeugs mit einer Transmissionsanordnung zur Übertragung einer Drehbewegung von einer ersten Welle unter einem Winkel α > 0 auf eine zweite Welle, mit einem Gleichlaufgelenk mit einem ersten und einem zweiten Gelenkelement (1, 2), welche jeweils mit der ersten und der zweiten Welle verbunden oder verbindbar sind, **dadurch gekennzeichnet, dass** die Drehbewegung homokinematisch von dem ersten (1) auf das zweite Gelenkelement (2) übertragbar ist, wobei
das Gleichlaufgelenk ein Dichtungsgehäuse (6, 7) mit einem starren Gehäuseelement (6), das mit einem Montageelement (3) verbunden ist und eine Abwinkelung um einen festen Winkel α₁ vorgibt, aufweist.

2. Hochauftriebssystem nach Anspruch 1, **dadurch gekennzeichnet, dass** die erste und die zweite Welle gegeneinander mit einem festen Winkel α an der Flugzeugstruktur montiert oder montierbar sind.

3. Hochauftriebssystem nach Anspruch 1 oder 2, **dadurch gekennzeichnet, dass** das Montageelement (3) zur festen Verbindung mit der Flugzeugstruktur, insbesondere mit einem Flansch dient, wobei das erste und/oder das zweite Gelenkelement (1, 2) über mindestens ein Lager (4) an dem Montageelement (3) gelagert ist bzw. sind.

4. Hochauftriebssystem nach Anspruch 3, **dadurch gekennzeichnet, dass** das Lager (4) in einer Ebene mit dem Gelenkmittelpunkt angeordnet ist.

5. Hochauftriebssystem nach einem der vorhergehenden Ansprüche, **dadurch gekennzeichnet, dass** das Gehäuseelement (6) als Dichtung für die Schmierung des Gelenkes dient, wobei das erste und/oder das zweite Gelenkelement (1, 2) über das Lager (4) gegenüber dem starren Gehäuseelement (6) drehbar gelagert ist, und wobei das Lager (4) vorzugsweise dichtend ausgeführt ist.

6. Hochauftriebssystem nach einem der vorhergehenden Ansprüche, **dadurch gekennzeichnet, dass** das starre Gehäuseelement (6) drehfest mit dem Montageelement (3), durch welches das Gleichlaufgelenk an einer Struktur fest montierbar ist, verbunden ist.

7. Hochauftriebssystem nach einem der vorhergehenden Ansprüche, **dadurch gekennzeichnet, dass** das Dichtungsgehäuse (6, 7) des Gleichlaufgelenks ein weiteres flexibles Gehäuseelement (7) aufweist, welches an dem starren Gehäuseelement (6) derart angeordnet ist, dass eine Veränderung des Strangwinkels α₁ realisierbar ist.

8. Hochauftriebssystem nach einem der vorhergehenden Ansprüche, **dadurch gekennzeichnet, dass** das flexible Gehäuseelement (7) vorzugsweise einen Balg oder eine Kulisse ist, welcher bzw. welche eine Montage mit unterschiedlichen Winkeln α₂ ermöglicht, wobei vorzugsweise |α₂ - α₁| < α₁.

9. Hochauftriebssystem nach einem der vorhergehenden Ansprüche, **dadurch gekennzeichnet, dass** das zweite Gelenkelement (2) an dem flexiblen Gehäuseelement (7) über ein Lager (5) drehbar gelagert ist.

10. Flugzeug mit einem Hochauftriebssystem nach einem der vorangegangen Ansprüche.

11. Verfahren zur Montage eines Hochauftriebssystem eines Flugzeugs mit einer Transmissionsanordnung nach einem der vorhergehenden Ansprüche in einer Vorrichtung, insbesondere in einem Antriebssystem von Stellflächen eines Flugzeugs, wobei die erste und die zweite Welle gegeneinander mit einem festen Winkel an einer Struktur der Vorrichtung montiert werden, wobei ein erster Winkel α₁ durch ein starres Gehäuseelement (6) vorgegeben wird, während eine Justage auf einen zweiten Winkel α₂ durch Abwinkeln eines weiteren flexiblen Gehäuseelements (7), insbesondere eines Balgs erfolgt, wobei vorteilhafterweise |α₂ - α₁| < α₁.

## Claims

1. A high lift system of an aircraft having a transmission arrangement for transferring a rotary movement from a first shaft to a second shaft at an angle α > 0, having a homokinetic joint with a first and a second joint element (1, 2) which are each connected or connectable to the first shaft and to the second shaft,
**characterised in that**
the rotary movement can be transferred homokinetically from the first joint element (1) to the second joint element (2), wherein the homokinetic joint has a sealing housing (6, 7) having a rigid housing element (6) which is connected to a mounting element (3) and which predefines an angling by a fixed angle α₁.

2. A high lift system in accordance with claim 1, **characterised in that** the first shaft and the second shaft are mounted or mountable to the aircraft structure at a fixed angle α with respect to one another.

3. A high lift system in accordance with claim 1 or claim 2, **characterised in that** the mounting element (3) serves the fixed connection to the aircraft structure, in particular to a flange, wherein the first and/or the second joint element (1, 2) is/are supported at the mounting element (3) via at least one bearing (4).

4. A high lift system in accordance with claim 3, **characterized in that** the bearing (4) is arranged in a plane with the joint centre.

5. A high lift system in accordance with one of the preceding claims, **characterised in that** the housing element (6) serves as a seal for the lubrication of the joint, with the first and/or the second joint element (1, 2) being rotatably supported with respect to the rigid housing element (6) via the bearing (4) and with the bearing (4) preferably being designed as sealing.

6. A high lift system in accordance with one of the preceding claims, **characterised in that** the rigid housing element (6) is rotationally fixedly connected to the mounting element (3) by which the homokinetic joint can be fixedly mounted at a structure.

7. A high lift system in accordance with one of the preceding claims, **characterised in that** the sealing housing (6, 7) of the homokinetic joint has a further flexible housing element (7) which is arranged at the rigid housing element (6) such that a change of the strand angle α₁ can be realized.

8. A high lift system in accordance with one of the preceding claims, **characterised in that** the flexible housing element (7) is preferably a bellows or a slotted link which allows a mounting at different angles α₂, wherein preferably |α₂ - α₁| < α₁.

9. A high lift system in accordance with one of the preceding claims, **characterised in that** the second joint element (2) is rotatably supported via a bearing (5) at the flexible housing element (7).

10. An aircraft having a high lift system in accordance with one of the preceding claims.

11. A method of assembling a high lift system of an aircraft having a transmission arrangement in accordance with one of the preceding claims in an apparatus, in particular in a drive system of adjustment surfaces of an aircraft, wherein the first shaft and the second shaft are mounted at a structure of the apparatus at a fixed angle with respect to one another, wherein a first angle α₁ is predefined by a rigid housing element (6), while an adjustment to a second angle α₂ takes place by angling a further flexible housing element (7), in particular a bellows, wherein advantageously |α₂ - α₁| < α₁.

## Revendications

1. Système hypersustentateur d'un avion comprenant un agencement de transmission destiné à transmettre un mouvement de rotation d'un premier arbre à un angle α > 0 sur un second arbre, comprenant un joint homocinétique doté d'un premier et d'un second élément de joint (1, 2), qui sont ou peuvent être reliés respectivement au premier et au second arbre, **caractérisé en ce que** le mouvement de rotation peut être transmis de manière homocinétique du premier (1) au second élément de joint (2), dans lequel le joint homocinétique comporte un boîtier d'étanchéité (6, 7) doté d'un élément de boîtier (6) rigide qui est relié à un élément de montage (3) et définit un coude autour d'un angle fixe α₁.

2. Système hypersustentateur selon la revendication 1, **caractérisé en ce que** le premier et le second arbre sont ou peuvent être montés l'un contre l'autre avec un angle fixe α sur la structure d'avion.

3. Système hypersustentateur selon la revendication 1 ou 2, **caractérisé en ce que** l'élément de montage (3) sert à la liaison fixe avec la structure d'avion, en particulier avec une bride, le premier et/ou le second élément de joint (1, 2) étant logé(s) sur l'élément de montage (3) par le biais d'au moins un palier (4).

4. Système hypersustentateur selon la revendication 3, **caractérisé en ce que** le palier (4) est disposé dans un plan avec le centre du joint.

5. Système hypersustentateur selon l'une des revendications précédentes, **caractérisé en ce que** l'élément de boîtier (6) sert d'élément d'étanchéité pour la lubrification du joint, le premier et/ou le second élément de joint (1, 2) étant logé(s) rotatif(s) par rapport à l'élément de boîtier (6) rigide par le biais du palier (4), et le palier (4) étant réalisé de préférence étanchéifiant.

6. Système hypersustentateur selon l'une des revendications précédentes, **caractérisé en ce que** l'élément de boîtier (6) rigide est relié solidaire en rotation à l'élément de montage (3) par lequel le joint homocinétique peut être monté fixement sur une structure.

7. Système hypersustentateur selon l'une des revendications précédentes, **caractérisé en ce que** le boîtier d'étanchéité (6, 7) du joint homocinétique comporte un autre élément de boîtier (7) flexible qui est disposé sur l'élément de boîtier (6) rigide de telle manière qu'une modification de l'angle de la chaîne α₁ peut être réalisée.

8. Système hypersustentateur selon l'une des revendications précédentes, **caractérisé en ce que** l'élément de boîtier (7) flexible est de préférence un soufflet ou une coulisse, qui permet un montage avec différents angles α₂, où, de préférence, |α₂-α₁|<α₁.

9. Système hypersustentateur selon l'une des revendications précédentes, **caractérisé en ce que** le second élément de joint (2) est logé rotatif sur l'élément de boîtier (7) flexible par le biais d'un palier (5).

10. Avion comprenant un système hypersustentateur selon l'une des revendications précédentes.

11. Procédé de montage d'un système hypersustentateur d'un avion comprenant un agencement de transmission selon l'une des revendications précédentes dans un dispositif, en particulier dans un système d'entraînement de surfaces de réglage d'un avion, le premier et le second arbre étant montés l'un contre l'autre avec un angle fixe sur une structure du dispositif, un premier angle α₁ étant prédéfini par un élément de boîtier (6) rigide, tandis qu'un réglage sur un second angle α₂ s'effectue par le pliage d'un autre élément de boîtier (7) flexible, en particulier d'un soufflet, où, de préférence, |α₂-α₁|<α₁.
